# EUROPEAN PATENT SPECIFICATION

(11) **EP 3 522 291 B1**
(45) Date of publication and mention of the grant of the patent: **29.09.2021**
(21) Application number: 18154418.0
(22) Date of filing: 31.01.2018
(51) Int. Cl.: H01M 10/6567, H01M 10/613, H01M 10/625, F16L 37/088, H01M 50/20, F16L 37/14

(54) **TUBE ASSEMBLY FOR A FLUID DISTRIBUTION SYSTEM OF A BATTERY PACK OF A VEHICLE AND BATTERY PACK FOR A VEHICLE**
ROHRANORDNUNG FÜR EIN FLÜSSIGKEITSVERTEILUNGSSYSTEM EINES BATTERIEPACKS EINES FAHRZEUGS UND BATTERIEPACK FÜR EIN FAHRZEUG
ENSEMBLE DE TUBE POUR UN SYSTÈME DE DISTRIBUTION DE FLUIDE D'UN BLOC-BATTERIE D'UN VÉHICULE ET BLOC-BATTERIE DESTINÉ À UN VÉHICULE

(43) Date of publication of application: 07.08.2019
(73) Proprietor: Samsung SDI Co., Ltd., Yongin-si, Gyeonggi-do 17084 (KR)
(72) Inventor: MASARYK, Carl-Michael, 8010 Graz (AT); PUCHER, Matthias, 8052 Graz (AT)
(74) Representative: Gulde & Partner

(56) References cited:
- EP-A1- 3 121 501
- EP-A1- 3 179 148
- EP-A2- 2 017 520
- EP-A2- 2 610 947
- WO-A1-2012/117697
- DE-A1- 19 951 429
- FR-A1- 2 280 852
- US-A1- 2011 303 593

## Description

### Field of the Invention

The present invention relates to a tube assembly for a fluid distribution system of a battery pack of a vehicle, and to a battery pack for a vehicle.

### Technological Background

In the recent years, vehicles for transportation of goods and people have been developed using electric power as a source for motion. Such an electric vehicle, for example an automobile, is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules, which each comprise at least one or even several battery cells. The modules may be configured in a series, parallel or a mixture of both to deliver the desired voltage, capacity, or power density. Components of battery packs include the individual battery modules, and the interconnects, which provide electrical conductivity between them. A battery management system (BMS) is provided for managing the battery pack, such as by protecting the battery from operating outside its safe operating area, monitoring its state, calculating secondary data, reporting that data, controlling its environment, authenticating it and/or balancing it.

To provide thermal control of the battery pack a thermal management system is required to use the at least one battery module within a predefined temperature range by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required. The cooling is usually done by a cooling fluid that is led to and through a cooling fluid path of the batter pack.

The mechanical integration of such a battery pack requires appropriate mechanical connections between the individual components and in particular between tubes of the tube assembly, which may be used to conduct or transport a thermal control fluid.

These connections must remain functional and safe during the average service life of the battery system. Yet, in case a battery module needs to be removed from the battery pack, it is required that the connections between the tubes of the tube assembly can be opened easily and in a reversible manner. Hence, tubes that are merely telescoped are not sufficiently secured against unintended movements. Furthermore, it is known to interconnect tubes by means of bayonet connections. Yet, when opening such a bayonet connection, it is required to turn one of the tubes with respect to another one of the tubes around a central axis of the tubes, which is cumbersome due to limited space in the battery pack or in the vehicle for tools. FR2280852 and DE19951429 disclose tube assemblies using a clamp to secure different parts.

It is thus an object of the present invention to overcome or reduce at least some of the drawbacks of the prior art and to provide a tube assembly that can be disassembled easily.

### Summary of Invention

According to the invention, the object is achieved by a tube assembly according to the claims. For the battery pack, which comprises a plurality of battery modules and a fluid distribution system with a tube assembly, the object is achieved in that the tube assembly is the tube assembly according to the invention. The locking ring interconnects the first tube and the connector tube by a form fit, which prevents movements of the first tube and the connector tube with respect to each other alone their longitudinal axes. Yet, when this form fit is opened, the first tube and the connector tube can be readily moved with respect to each other alone their longitudinal axes, i.e. telescoped, in order to open the tube assembly and, thus, the fluid distribution system. Rotating any of the first tube and the connector tube is not required. Translational movements of the first tube or the connector tube suffice.

The invention can be improved by the following embodiments, which, unless explicitly stated to the contrary, can be combined as desired and are advantageous on their own, in each case.

According to an embodiment of the tube assembly, the connector tube comprises at least two through slits that are arranged after each other and are separated by wall segments of the connector tube from each other in the circumferential direction. An advantage of this embodiment may be that the form fit between the first tube and the connector is provide by the locking ring at different places, which provides a more stable fit, wherein the wall segments assure stability of the connector tube.

According to an embodiment of the tube assembly, the through slits are arranged opposite to each other with respect to the longitudinal axis of the connector tube. An advantage of this embodiment may be that the form fit is symmetrically provided at the opposite sides of the first tube and the connector tube, such that forced that seek to change the position of the first tube and the connector tube with respect to each other and along their longitudinal axes do not cause any undesired forces that act on the first tube and the connector tube perpendicular to the longitudinal axes.

According to an embodiment of the tube assembly, the through slits are formed parallel or mirror symmetrically to each other. In particular, the through slits may extend perpendicular to the longitudinal axis of the connector tube. Alternatively, the through slits may extend under an angle to the longitudinal axis, the angle differing from 90 degrees and for example being less than 90, less than 75, less than 60, less than 45, less than 30 or less than 15, but greater than 0 degrees. An advantage of this embodiment may be that forces that seek to change the position of the first tube and the connector tube with respect to each other and along their longitudinal axes are evenly passed to the locking ring and may even be passed to the locking ring without resulting in forces that seek to rotate the connector tube with respect to each other and around to the longitudinal axes.

According to an embodiment of the tube assembly, the lengths of the through slits along the circumferential direction and/or along the through slits are identical. An advantage of this embodiment may be that forces that act onto the form fit are evenly and/or symmetrically passed to the locking ring.

According to an embodiment of the tube assembly, the lengths of the through slits correspond to a fourth of the complete circumference of the connector tube. An advantage of this embodiment may be that the form fit provided by the locking ring and the mechanical stability provided by the wall segments is maximal.

According to the invention the locking ring comprises two latch elements that essentially extend perpendicular to a plane in which a main section of the locking ring is arranged, and the connector tube comprises two counter latch elements that are arranged to form a latch connection with the latch elements when the locking ring is in its locking position. An advantage of this may be that the locking ring cannot be removed unintentionally from its locking position, for example by vibrations caused when the vehicle moves, thereby ensuring that the form fit that holds the first tube and the connector tube together is stable even under mechanically rough conditions.

According to the invention the connector tube comprises two holding elements that are adapted to form a latch connection with the latch elements and that are arranged to hold the locking ring in its release position, in which the locking ring is completely arranged outside of the groove. An advantage of this may be that the locking ring can be preassembled in a captive manner before mounting the connector tube to the first tube, thereby facilitating mounting and fastening the connector tube to the first tube.

According to an embodiment of the tube assembly, the two holding elements are arranged before the counter latch elements in a direction perpendicular to the longitudinal axis of the connector tube. An advantage of this embodiment may be that the locking ring can simply be pushed in a direction that points from the holding elements to the respective counter latch element in order to transfer the locking element from its release position into its locking position, again facilitating mounting and fastening the connector tube to the first tube.

According to an embodiment of the tube assembly, the two counter latching elements are arranged at ends of the through slits, the ends essentially facing in the same direction. An advantage of this embodiment may be that the locking ring can essentially extend through the complete slits, thereby maximizing the length of the form fit and improving the strength of the form fit.

According to an embodiment of the tube assembly, the connector tube comprises a first end and a second end, wherein only at the first end, the at least one through slit is formed. An advantage of this embodiment may be that the connector tube can be formed and the form fit can be established easily, wherein the form fit between the first tube and the connector tube is sufficient for maintaining the tube assembly assembled.

According to an embodiment of the tube assembly, the connector tube comprises a first end and a second end, wherein the at least one through slit is formed at the first end, and wherein the inner diameter of a first end section the includes the first end and the at least one through slit is greater that the inner diameter of a middle section of the connector tube that neighbors the first end section. An advantage of this embodiment may be that the first tube may have an outer diameter that corresponds to the inner diameter of the middle section, which improves sealing characteristics between the first tube and the connector tube, wherein the groove of the first tube can easily be provided between ridges that, according to an embodiment, are arranged on the outer side of the first tube and can be introduced or telescoped into the first end section via the first end.

According to an embodiment of the tube assembly, the inner diameter of the second end equals the inner diameter of the middle section. An advantage of this embodiment may be that another, second, tube can be introduced and e.g. telescoped into the connector tube via the second end with similar sealing properties at the first tube.

According to an embodiment of the tube assembly, along the longitudinal axis of the tube assembly, the connector tube can succeed the first tube, the second tube can succeed the connector tube and a bellow or gaiter can succeed the second tube. After the bellow, another fist tube can follow etc. An advantage of this embodiment may be that the length of the tube assembly can easily be adapted.

According to an embodiment of the tube assembly, the first tube and/or the second tube comprises a branch conduit for connecting the tube assembly to battery units of a batter pack in a fluid conducting manner. The branch conduits extend perpendicular to a longitudinal axis of the tube assembly, wherein the longitudinal axis may coincide with the longitudinal axis of the connector tube and/or each of the longitudinal axes of the first and second tubes. The main section of the locking ring faces away from the respective side of the first and/or second tubes the branch conduits are based on, and the opening of the locking ring faces in the same direction as the branch conduits.

When viewed from the side opposite the side of the first and second tubes from which the branch conduits protrude and perpendicular to the longitudinal axis or in the radial direction, the holding elements are be arranged behind the counter latch elements.

According to an embodiment of the tube assembly, in its release position, the locking ring is moved away from its locking position perpendicular to the longitudinal axis and along the radial direction. In particular, in the release position, the locking ring is arranged behind the locking position when viewed from the side of the first and/or second tubes from which the branch conduits protrude. In its release position, the latch elements may be latched with the holding elements, such that the locking ring is held in a captive manner and can, hence, not fall off of the connector tube. An advantage of this embodiment may be that the connector tube can be handled and mounted with the locking ring attached, which facilitates mounting the tube assembly. Another advantage of this embodiment may be that it is sufficient to simply push the main section of the locking ring towards the connector tube, i.e. towards its longitudinal axis, in order to move the locking ring from its release position into its locking position in order to establish the form fit between the connector tube and the first tube.

According to an embodiment of the battery pack, the connector tube is at least sectionwise arranged between adjacent battery modules. An advantage of this embodiment may be that sections of the tube assembly that would block removal of one of the battery modules can easily be removed.

According to an embodiment of the battery pack, the bellow or gaiter is arranged between gaps between adjacent battery modules. An advantage of this embodiment may be that the first and the second tubes, and possibly also the connector tube can be moved such that the length of the bellow or gaiter is reduced and a section of the tube assembly that comprises the first and the second tubes, and possibly also the connector tube can easily be removed from the tube assembly.

The locking ring usually is not completely circular, but has an open side at which free ends of the locking ring end. The free ends are elastically movable away from and towards each other in order to widen or narrow the open side. The locking ring may also be designated as retaining ring or circlip and may be made an elastic material like spring steel.

### Brief Description of the Drawings

Features will become apparent to those of ordinary skill in the art by describing in detail exemplary embodiments with reference to the attached drawings in which:
Fig. 1 illustrates a schematic side view of a first exemplary embodiment of a connector tube;
Fig. 2 illustrates a schematic side view of another exemplary embodiment of a connector tube with two additional tubes connected and locked to a connector tube;
Fig. 3 illustrates another schematic perspective view of the exemplary embodiment of figure 2;
Fig. 4 illustrates a schematic cross-sectional view of the exemplary embodiment of figure 3;
Fig. 5 illustrates the exemplary embodiment of figure 2 with the two additional tubes still connected to but unlocked from the connector tube in a schematic side view;
Fig. 6 illustrates another schematic side view of the exemplary embodiment of figure 5;
Fig. 7 illustrates a schematic cross-sectional view of the exemplary embodiment of figure 5;
Fig. 8 illustrates a schematic perspective view of a battery pack according to an exemplary embodiment ;
Fig. 9 illustrates a schematic perspective view of an enlarged detail of the battery pack according to the exemplary embodiment of Fig. 8;
Fig. 10 illustrates a schematic perspective view of another enlarged detail of the battery pack according to the exemplary embodiment of Fig. 8.

### Detailed Description of the Invention

Reference will now be made in detail to embodiments, examples of which are illustrated in the accompanying drawings. In the drawings, like reference numerals denote like elements, and redundant descriptions are omitted. As used herein, the term "and/or" includes any and all combinations of one or more of the associated listed items.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of exemplary embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

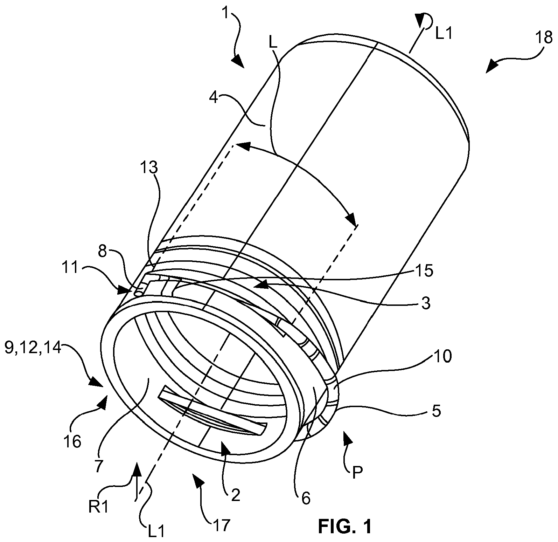

Fig. 1 shows an exemplary embodiment of the connector tube 1 for connecting a first tube to a second tube in a schematic perspective view. The connector tube 1 comprises a longitudinal axis L1 and is provided with two through slits 2, 3 that completely extends through the wall 4 of the connector tube 1 in a radial direction R1 of the connector tube 1, the radial direction R1 extending perpendicular to the longitudinal axis L1. The through slits 2, 3 incompletely surround the longitudinal axis L1 of the connector tube 1 in the circumferential direction C1 of the connector tube 1, the circumferential direction C1 extending around the longitudinal axis L1 and for example along the outer side of the wall 4. The connector tube 1 may comprise more or less than the two through slits 2, 3 shown in the exemplary embodiment of Fig. 1.

The connector tube 1 is shown with an elastically deformable locking ring 5 for locking the first tube to the connector tube 1 in their assembled and e.g. partly telescoped state. The locking ring 5 is adapted to extend through the through slits 2, 3 and into a groove of the first tube in its depicted locking position P.

The through slits 2, 3 may be arranged after each other and may be separated from each other by wall segments 6, 7 in the circumferential direction C1. The through slits 2, 3 may be arranged opposite to each other with respect to the longitudinal axis L1 of the connector tube1. The through slits 2, 3 may be formed parallel to each other.

The lengths L of the through slits 2, 3 along the circumferential direction C1 and/or along the slits may be identical. For example, the lengths L of the through slits 2, 3 and or the respective lengths of the wall segments 6, 7 may correspond to a fourth of the complete circumference of the connector tube 1.

The locking ring 5 may comprise two latch elements 8, 9 that essentially extend perpendicular to a plane in which a main section 10 of the locking ring 5 is arranged. The main section 10 may extend between the two latch elements 8, 9. The latch elements 8, 9 may be formed by protrusions and for example by sections of the locking ring 5 that are bent out of the plane of the main section 10. The two latch elements 8, 9 may be formed by the free ends of the locking ring 5.

The connector tube 1 comprises two counter latch elements 11, 12 that are arranged to form latch connections with the latch elements 8, 9 when the locking ring 5 is in its locking position P. The counter latch elements 11, 12 may be formed complementary to the latch elements 8, 9 and are for example provided as openings, holes or indentations in the wall 4, wherein the openings, holes or indentations open away from the longitudinal axis L1. For example, the counter latch elements 11, 12 are arranged at ends 13, 14 of the through slits 2, 3, the ends 13, 14 essentially facing in the same direction.

The connector tube 1 may comprise two holding elements 15, 16 that are adapted to form a latch connection with the latch elements 8, 9 and that are arranged to hold the locking ring 5 in its release position, in which the locking ring 5 is completely arranged outside of the groove and maybe also outside of the through slits 2, 3. For example, the two holding elements 15, 16 are arranged before the counter latch elements11, 13 perpendicular to the longitudinal axis L1 of the connector tube 1. For example, the holding elements 15, 16 are arranged at a distance to the ends 13, 14 of the through slits 2, 3.

The two holding elements 15, 16 may be formed complementary to the latch elements 8, 9 and are for example provided as openings, holes or indentations in the wall 4, wherein the openings, holes or indentations open at least away from the longitudinal axis L1.

The connector tube 1 comprises a first end 17 and a second end 18, wherein only at the first end 17, the through slits 2, 3 are formed.

The connector tube 1 of the exemplary embodiment of Fig. 1 comprises a constant inner and/or constant outer diameter, such that the connector tube 1 can be formed easily.

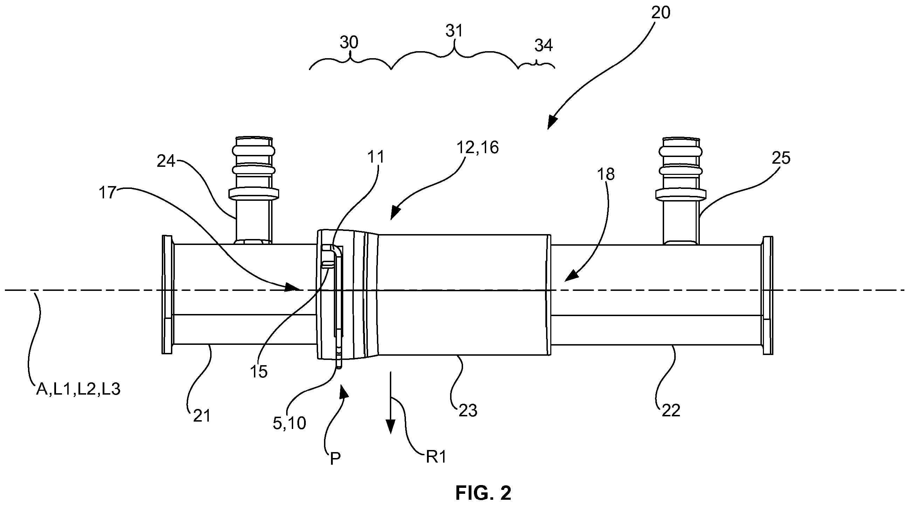

Figs. 2 to 4 and 5 to 7 show different views and states of an exemplary embodiment of the tube assembly with another exemplary embodiment of the connector tube, wherein instead of the exemplary embodiment of the connector tube of Figs. 2 to 4 and 5 to 7, the connector tube 1 according to the exemplary embodiment of Fig. 1 may be present. For the sake of brevity, only the differences with respect to the exemplary embodiment of figure 1 are discussed in the following.

The tube assembly 20 comprises the first tube 21 for conducting fluid, optionally a second tube 22, another embodiment of the connector tube 23 for interconnecting the first tube 21 and the second 22 in a fluid conducting manner, and the locking ring 5 that is arranged in its locking position P in Figs. 2 to 4. The first tube 21 and/or the second tube 22 may comprise a branch conduit 24, 25 for connecting the tube assembly 20 to battery units of a batter pack in a fluid conducting manner. The branch conduits 24, 25 may extend perpendicular to a longitudinal axis A of the tube assembly 20, wherein the longitudinal axis A may coincide with the longitudinal axis L1 of the connector tube and/or each of the longitudinal axes L2, L3 of the first and second tubes 21, 22. The main section 10 of the locking ring 5 may face away from and an the opening of the locking ring 5 may face in the same direction as the branch conduits 24, 25. When viewed from the side opposite of the side of the first and second tubes 21, 22 from which the branch conduits 24, 25 protrude and perpendicular to the longitudinal axis A or in the radial direction R1 the holding elements 15, 16 may be arranged behind the counter latch elements 11, 12.

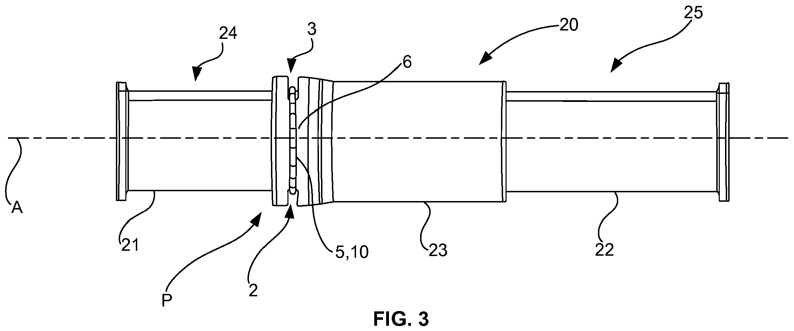

In Fig. 3, the tube assembly 20 is shown rotated around the longitudinal axis A, such that the branch conduits 24, 25 extend into the drawing plane and are covered by the first and second tubes 21, 22. As vividly depicted in Fig 3, the locking ring 5 in its locking position P extends through the through slits 2, 3. The main section 10 of the locking ring 5 may rest against the wall segment 6. Relative movements of the first tube 21 and the connector tube 23 along the longitudinal axis A are blocked by the locking ring 5.

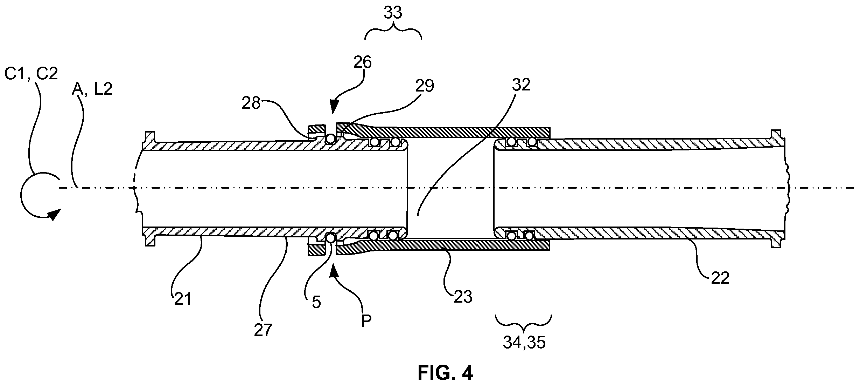

The cross-sectional view of figure 4 shows a groove 26 the first tube 21 comprises along its outer circumference. In its locking position P, the locking ring 5 extends not onto through the through slits 2, 3, but also into the groove 26 and forms a form fit between the first tube 21 and the connector tube 23.

The groove 26 may extend into the wall 27 of the first tube 21. In particular in such a case, the connector tube 1 of the exemplary embodiment of Fig. 1 may be used. In the exemplary embodiment of Figs. 2 to 7, however, the groove 26 is provided between two ridges 28, 29 that are arranged on the outer side of the wall 27 and extend in a circumferential direction C2 of the first tube 21 around the longitudinal axis L2, wherein the circumferential direction C2 may correspond to the circumferential direction C1. A clear width between the ridges 28, 29 along the longitudinal axis A may correspond to a clear width of the through slits 2, 3 in the same direction.

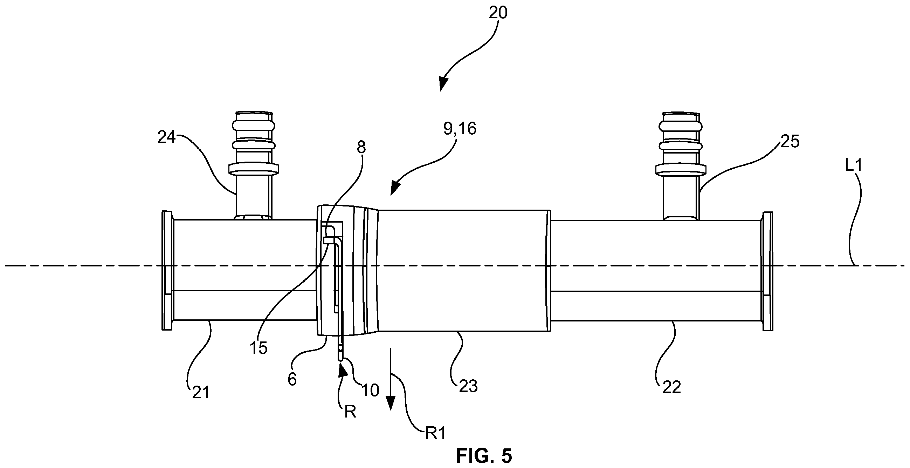

Figs. 5 to 7 show the same embodiment as Figs. 2 to 4 in identical views, but with the locking ring 5 arranged in its release position R. In the release position R, the locking ring 5 is moved away from the locking position P perpendicular to the longitudinal axis L1 and along the radial direction R1. In particular, the release position R may be arranged behind the locking position P when viewed from the side of the first and/or second tubes 21, 23 from which the branch conduits 24, 25 protrude. In its release position R, the latch elements 8, 9 are latched with the holding elements 15, 16, such that the locking ring 5 is held in a captive manner and can, hence, not fall off of the connector tube 23.

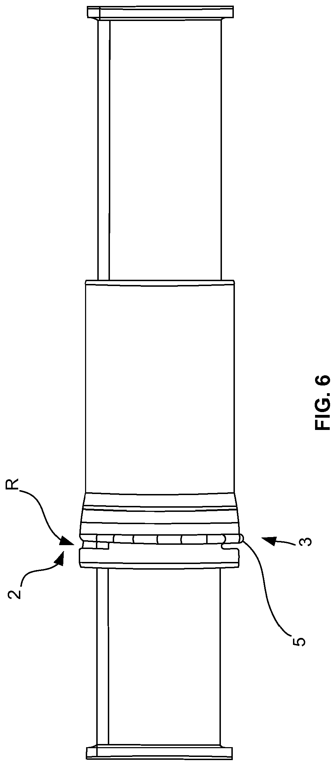

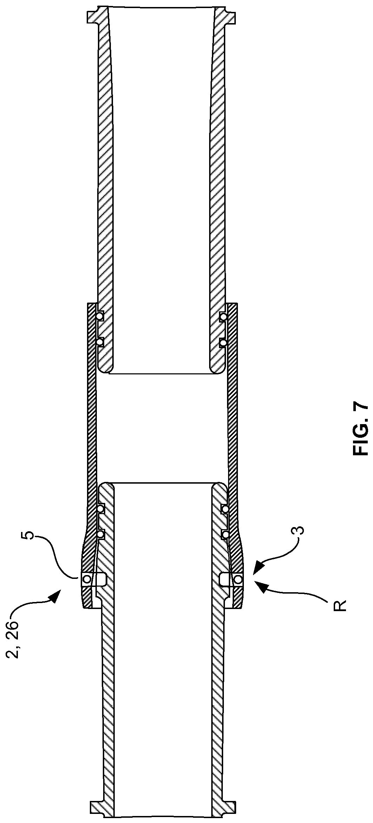

As vividly shown in Figs. 6 and 7 the locking ring 5 is arranged outside of the groove 26 and may at least sectionwise extend through the through slits 2, 3. Hence, relative movements between the first tube 21 and the connector tube 23 are not blocked by the locking ring 5 in its release position R. The main section 10 of the locking ring 5 may be arranged in a distance to the wall segment 6 in the release position R of the locking ring 5. Hence, in order to move the locking ring 5 from the release position R into its locking position P, it may suffice to press the main section 10 in particular centrally between the latch elements 8, 9 and/or between the free ends or between the latch elements 8, 9 of the locking ring 5 in the radial direction R1 towards the wall segment 6.

As shown in the exemplary embodiment of Figs 2 to 7, the through slits 2, 3 are formed at the first end 17, and the inner diameter of a first end section 30 that includes the first end 17 and the through slits 2, 3 may be greater than the inner diameter of a middle section 31 of the connector tube 23 that neighbors the first end section 30. Hence, even if the groove 26 of the first tube 21 is formed by the ridges 28, 29, the first tube 21 with the ridges 28, 29 can still be introduced into the first end section 30.

Between an end 32 of the first tube 21 and the groove 26 and in particular the ridge 29, the first tube 26 may comprise a sealing section 33 for sealing a gap between the first tube 21 and the connection 23 and in particular its middle section 31. For example, at least one and maybe two sealing elements or rings can be present on the outer side of the sealing section 33 at least in the assembled state of the tube assembly 20.

Another, second, end section 34 of the connector tube 23, that is arranged opposite to the first end section 30 may comprise an inner diameter that corresponds to the inner diameter of the middle section 31. The second tube 22 may comprise a sealing section 35 for sealing a gap between the first tube 22 and the connector tube 23 and in particular its second end section 34. For example, at least one and maybe two sealing elements or rings can be present on the outer side of the sealing section 35 at least in the assembled state of the tube assembly 20.

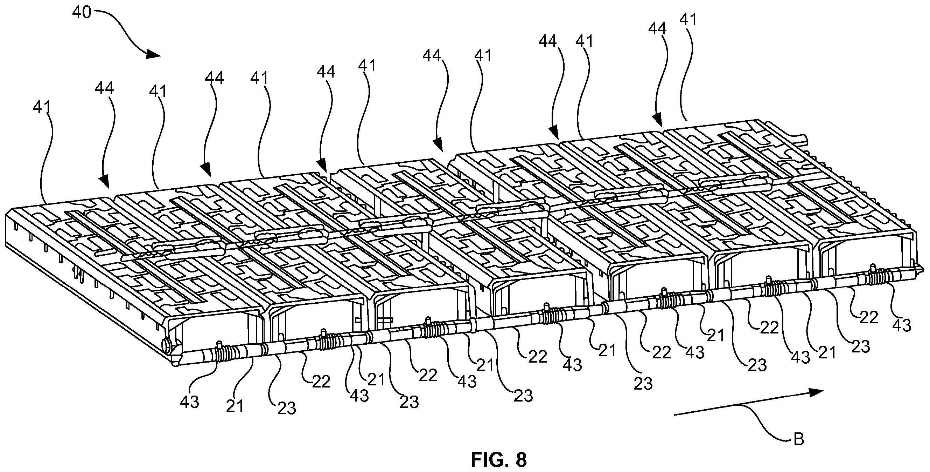

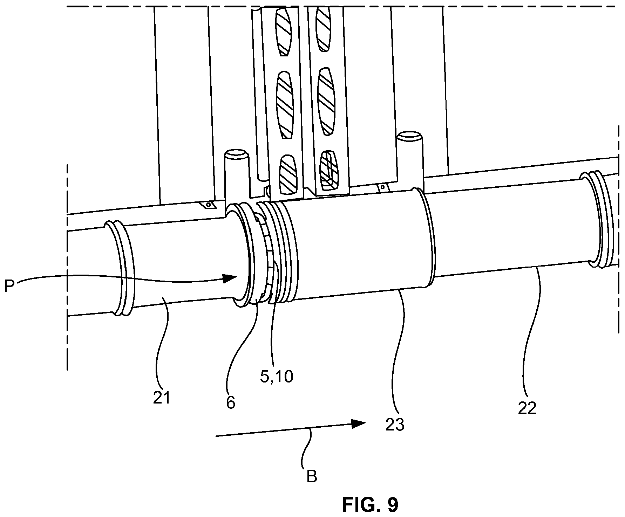

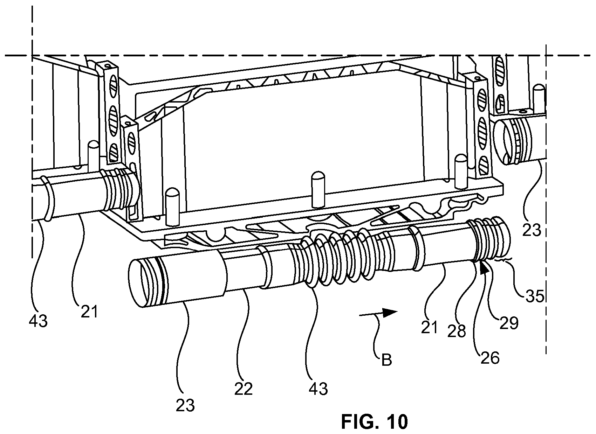

Figs. 8 to 10 show an exemplary embodiment of a battery pack with the tube assembly of the exemplary embodiments shown in Figs 2 to 7 in schematic perspective views. Fig. 8 shows an overview of the battery pack and Figs. 9 and 10 show enlarged details of the battery pack. Again, instead of the connector tube 23, the connector tube 1 may be used.

The battery pack 40 comprises a plurality of battery units 41, which each comprises a plurality of battery modules and which are arranged one after the other along a longitudinal direction B of the battery pack 40. Furthermore, the battery pack 40 comprises a fluid distribution system 42 comprising the tube assembly20.

The connector tube 23 may at least partly be arranged between adjacent battery modules 41 along the longitudinal axis A.

At least in the area of the first tube 21, the second tube 22 and the connector tube 23, the longitudinal axis of the fluid distribution system 42 may correspond to the longitudinal axis A, which is, however, not shown in Figs. 8 to 10, for the sake of simplicity.

Along the longitudinal axis A of the tube assembly 20, the connector tube 23 can succeed the first tube 21, the second tube 22 can succeed the connector tube 23 and a bellow 43 or gaiter can succeed the second tube 22. After the bellow 43, another first tube 21 can follow etc.

The bellow 43 or gaiter may be arranged between gaps 44 between adjacent battery modules 41.

All connector tubes 23 of the tube assembly 20 may be oriented in the same direction, such that for example the first ends 17 face against the longitudinal direction B.

### Reference Numerals

- 1: connector tube
- 2: through slit
- 3: through slit
- 4: wall
- 5: locking ring
- 6: wall segment
- 7: wall segment
- 8: latch element of locking ring
- 9: latch element of locking ring
- 10: main section of locking ring
- 11: counter latch element
- 12: counter latch element
- 13: end of slit
- 14: end of slit
- 15: holding element
- 16: holding element
- 17: first end
- 18: second end
- 20: tube assembly
- 21: first tube
- 22: second tube
- 23: connector tube
- 24: branch conduit
- 25: brank conduit
- 26: groove
- 27: wall of first tube
- 28: ridge
- 29: ridge
- 30: first end section of connector tube
- 31: middle section of connector tube
- 32: end of first tube
- 33: sealing section of first tube
- 34: second end section of connector tube
- 35: sealing section of second tube
- 40: battery pack
- 41: battery module
- 42: fluid distribution system
- 43: bellow
- 44: gap between adjacent battery modules

- A: longitudinal axis of tube assembly
- B: longitudinal direction of battery pack
- C1: circumferential direction of connector tube
- C2: circumferential direction of first tube
- L: length of through slit
- L1: longitudinal axis of connector tube
- L2: longitudinal axis of first tube
- L3: longitudinal axis of second tube
- P: locking position of locking ring
- R: release position of locking ring
- R1: radial direction of connector tube

## Claims

1. Tube assembly (20) for a fluid distribution system (42) of a battery pack (40) of a vehicle, comprising at least a first tube (21) for conducting fluid, a connector tube (1, 23) for connecting the first tube (21) to a second tube (22), and an elastically deformable locking ring (5) for locking the first tube (21) to the connector tube (23) in their assembled state, wherein the first tube (21) comprises a groove (26) along its outer circumference, the connector tube (1, 23) comprises at least one through slit (2, 3) that completely extends through the wall (4) of the connector tube (1, 23) in a radial direction (R1) of the connector tube (1, 23) and that incompletely surrounds the longitudinal axis (L1) of the connector tube (1, 23) in the circumferential direction (C1) of the connector tube (1, 23), and the locking ring (5) is adapted to extend through the through slit (2, 3) and into the groove (26) in its locking position (P), wherein
the locking ring (5) comprises two latch elements (8, 9) that essentially extend perpendicular to a plane in which a main section (10) of the locking ring (5) is arranged,
**characterized in that**
the connector tube (1, 23) comprises two counter latch elements (11, 12) that are arranged to form a latch connection with the latch elements (8, 9) when the locking ring (5) is in its locking position (P), and **in that**
the connector tube (1, 23) comprises two holding elements (15, 16) that are adapted to form a latch connection with the latch elements (8, 9) and that are arranged to hold the locking ring (5) in its release position (R), in which the locking ring (5) is completely arranged outside of the groove (26).

2. Tube assembly (20) according to claim 1, **characterized in that** the connector tube (1, 23) comprises at least two through slits (2, 3) that are arranged after each other and are separated by wall segments (6, 7) of the connector tube (1, 23) from each other in the circumferential direction (C1).

3. Tube assembly (20) according to claim 2, **characterized in that** the through slits (2, 3) are arranged opposite to each other with respect to the longitudinal axis (L1) of the connector tube (1, 23).

4. Tube assembly (20) according to claim 1 or 2, **characterized in that** the through slits (2, 3) are formed parallel to each other.

5. Tube assembly (20) according to any of claims 2 to 4, **characterized in that** the lengths (L) of the through slits (2, 3) along the circumferential direction (C1) are identical.

6. Tube assembly (20) according to claim 5, **characterized in that** the lengths (L) of the through slits (2, 3) correspond to a fourth of the complete circumference of the connector tube (1, 23).

7. Tube assembly (20) according to any of claims 1 to 6, **characterized in that** the two holding elements (15, 16) are arranged before the counter latch elements (11, 12) in a direction perpendicular to the longitudinal axis (L1) of the connector tube (1, 23).

8. Tube assembly (20) according to any of claims 1 to 7, **characterized in that** the two counter latching elements (11, 12) are arranged at ends (13, 14) of the through slits (2, 3), the ends (13, 14) essentially facing in the same direction.

9. Tube assembly (20) according to any of claims 1 to 8, **characterized in that** the connector tube (1, 23) comprises a first end (17) and a second end (18), wherein only at the first end (17), the at least one through slit (2, 3) is formed.

10. Tube assembly (20) according to any of claims 1 to 8, **characterized in that** the connector tube (23) comprises a first end (17) and a second end (18), wherein the at least one through slit (2, 3) is formed at the first end (17), and wherein the inner diameter of a first end section (30) that includes the first end (17) and the at least one through slit (2, 3) is greater that the inner diameter of a middle section (31) of the connector tube (23) that neighbors the first end section (30).

11. Tube assembly (20) according to claim 10, **characterized in that** the inner diameter at the second end (18) equals the inner diameter of the middle section (31).

12. Battery pack (40) for a vehicle, with a plurality of battery modules (41) and a fluid distribution system (42) comprising a tube assembly (20), wherein the tube assembly (20) is the tube assembly (20) of any of claims 1 to 11.

13. Battery pack (40) according to claim 12, **characterized in that** the connector tube (1, 23) is at least sectionwise arranged between adjacent battery modules (41).

## Patentansprüche

1. Rohranordnung (20) für ein Flüssigkeitsverteilungssystem (42) eines Batteriepacks (40) eines Fahrzeugs, aufweisend zumindest ein erstes Rohr (21) zum Leiten von Flüssigkeit, ein Verbindungsrohr (1, 23) zum Verbinden des ersten Rohrs (21) mit einem zweiten Rohr (22) und einen elastisch verformbaren Verriegelungsring (5) zum Verrasten des ersten Rohrs (21) mit dem Verbindungsrohr (23) in ihrem zusammengebauten Zustand, wobei das erste Rohr (21) eine Nut (26) entlang seines Außenumfangs aufweist, wobei das Verbindungsrohr (1, 23) zumindest einen Durchgangsschlitz (2, 3) aufweist, der sich in einer radialen Richtung (R1) des Verbindungsrohrs (1, 23) vollständig durch die Wand (4) des Verbindungsrohrs (1, 23) erstreckt und die Längsachse (L1) des Verbindungsrohrs (1, 23) in der Umfangsrichtung (C1) des Verbindungsrohrs (1, 23) unvollständig umgibt, und wobei der Verriegelungsring (5) angepasst ist, um sich in seiner Verriegelungsposition (P) durch den Durchgangsschlitz (2, 3) und in die Nut (26) zu erstrecken, wobei der Verriegelungsring (5) zwei Verriegelungselemente (8, 9) aufweist, die sich im Wesentlichen perpendikulär zu einer Ebene, in der ein Hauptabschnitt (10) des Verriegelungsrings (5) angeordnet ist, erstrecken,
**dadurch gekennzeichnet, dass**
das Verbindungsrohr (1, 23) zwei Gegenverriegelungselemente (11, 12) aufweist, die angeordnet sind, um eine Verriegelungsverbindung mit den Verriegelungselementen (8, 9) auszubilden, wenn der Verriegelungsring (5) in seiner Verriegelungsposition (P) ist, und dadurch, dass
das Verbindungsrohr (1, 23) zwei Halteelemente (15, 16) aufweist, die angepasst sind, um mit den Verriegelungselementen (8, 9) eine Verriegelungsverbindung auszubilden, und die angeordnet sind, um den Verriegelungsring (5) in seiner Freigabestellung (R), in der der Verriegelungsring (5) vollständig außerhalb der Nut (26) angeordnet ist, zu halten.

2. Rohranordnung (20) nach Anspruch 1, **dadurch gekennzeichnet, dass** das Verbindungsrohr (1, 23) zumindest zwei Durchgangsschlitze (2, 3) aufweist, die nacheinander angeordnet sind und durch Wandsegmente (6, 7) des Verbindungsrohrs (1, 23) in der Umfangsrichtung (C1) voneinander getrennt sind.

3. Rohranordnung (20) nach Anspruch 2, **dadurch gekennzeichnet, dass** die Durchgangsschlitze (2, 3) einander gegenüberliegend bezüglich der Längsachse (L1) des Verbindungsrohrs (1, 23) angeordnet sind.

4. Rohranordnung (20) nach Anspruch 1 oder 2, **dadurch gekennzeichnet, dass** die Durchgangsschlitze (2, 3) parallel zueinander ausgebildet sind.

5. Rohranordnung (20) nach einem der Ansprüche 2 bis 4, **dadurch gekennzeichnet, dass** die Längen (L) der Durchgangsschlitze (2, 3) entlang der Umfangsrichtung (C) identisch sind.

6. Rohranordnung (20) nach Anspruch 5, **dadurch gekennzeichnet, dass** die Längen (L) der Durchgangsschlitze (2, 3) einem Viertel des Gesamtumfangs des Verbindungsrohrs (1, 23) entsprechen.

7. Rohranordnung (20) nach einem der Ansprüche 1 bis 6, **dadurch gekennzeichnet, dass** die zwei Halteelemente (15, 16) vor den Gegenverriegelungselementen (11, 12) in einer zur Längsachse (L1) des Verbindungsrohrs (1, 23) perpendikulären Richtung angeordnet sind.

8. Rohranordnung (20) nach einem der Ansprüche 1 bis 7, **dadurch gekennzeichnet**, das die zwei Gegenverriegelungselemente (11, 12) an Enden (13, 14) der Durchgangsschlitze (2, 3) angeordnet sind, wobei die Enden (13, 14) im Wesentlichen in dieselbe Richtung zeigen.

9. Rohranordnung (20) nach einem der Ansprüche 1 bis 8, **dadurch gekennzeichnet, dass** das Verbindungsrohr (1, 23) ein erstes Ende (17) und ein zweites Ende (18) aufweist, wobei der zumindest eine Durchgangsschlitz (2, 3) nur am ersten Ende (17) ausgebildet ist.

10. Rohranordnung (20) nach einem der Ansprüche 1 bis 8, **dadurch gekennzeichnet, dass** das Verbindungsrohr (23) ein erstes Ende (17) und ein zweites Ende (18) aufweist, wobei der zumindest eine Durchgangsschlitz (2, 3) am ersten Ende (17) ausgebildet ist und wobei der Innendurchmesser eines ersten Endabschnitts (30), der das erste Ende (17) und den zumindest einen Durchgangsschlitz (2, 3) aufweist, größer ist als der Innendurchmesser eines mittleren Abschnitts (31) des Verbindungsrohrs (23), der zum ersten Endabschnitt (30) benachbart ist.

11. Rohranordnung (20) nach Anspruch 10, **dadurch gekennzeichnet, dass** der Innendurchmesser am zweiten Ende (18) gleich dem Innendurchmesser des mittleren Abschnitts (31) ist.

12. Batteriepack (40) für ein Fahrzeug mit einer Vielzahl von Batteriemodulen (41) und einem Flüssigkeitsverteilungssystem (42), aufweisend eine Rohranordnung (20), wobei die Rohranordnung (20) die Rohranordnung (20) nach einem der Ansprüche 1 bis 11 ist.

13. Batteriepack (40) nach Anspruch 12, **dadurch gekennzeichnet, dass** das Verbindungsrohr (1, 23) zumindest abschnittsweise zwischen benachbarten Batteriemodulen (41) angeordnet ist.

## Revendications

1. Ensemble de tubes (20) pour un système de distribution de fluide (42) d'un bloc-batterie (40) d'un véhicule, comprenant au moins un premier tube (21) pour conduire le fluide, un tube connecteur (1, 23) pour raccorder le premier tube (21) à un second tube (22), et une bague de verrouillage élastiquement déformable (5) pour verrouiller le premier tube (21) sur le tube connecteur (23) dans leur état assemblé, dans lequel le premier tube (21) comprend une rainure (26) le long de sa circonférence externe, le tube connecteur (1, 23) comprend au moins une fente débouchante (2, 3) qui s'étend complètement à travers la paroi (4) du tube connecteur (1, 23) dans une direction radiale (R1) du tube connecteur (1, 23) et qui entoure, de manière incomplète, l'axe longitudinal (L1) du tube connecteur (1, 23) dans la direction circonférentielle (C1) du tube connecteur (1, 23), et la bague de verrouillage (5) est adaptée pour s'étendre à travers la fente débouchante (2, 3) et dans la rainure (26) dans sa position de verrouillage (P), dans lequel :
la bague de verrouillage (5) comprend deux éléments de verrou (8, 9) qui s'étendent essentiellement perpendiculairement à un plan dans lequel une section principale (10) de la bague de verrouillage (5) est agencée,
**caractérisé en ce que** :
le tube connecteur (1, 23) comprend deux éléments de verrou antagonistes (11, 12) qui sont agencés pour former un raccordement de verrou avec les éléments de verrou (8, 9) lorsque la bague de verrouillage (5) est dans sa position de verrouillage (P), et **en ce que** :
le tube connecteur (1, 23) comprend deux éléments de maintient (15, 16) qui sont adaptés pour former un raccordement de verrou avec les éléments de verrou (8, 9) et sont agencés pour maintenir la bague de verrouillage (5) dans sa position de libération (R), dans laquelle la bague de verrouillage (5) est complètement agencée à l'extérieur de la rainure (26).

2. Ensemble de tubes (20) selon la revendication 1, **caractérisé en ce que** le tube connecteur (1, 23) comprend au moins deux fentes débouchantes (2, 3) qui sont agencées l'une après l'autre et sont séparées par des segments de paroi (6, 7) du tube connecteur (1, 23) l'une de l'autre dans la direction circonférentielle (C1).

3. Ensemble de tubes (20) selon la revendication 2, **caractérisé en ce que** les fentes débouchantes (2, 3) sont agencées à l'opposé l'une de l'autre par rapport à l'axe longitudinal (L1) du tube connecteur (1, 23).

4. Ensemble de tubes (20) selon la revendication 1 ou 2, **caractérisé en ce que** les fentes débouchantes (2, 3) sont formées parallèlement entre elles.

5. Ensemble de tubes (20) selon l'une quelconque des revendications 2 à 4, **caractérisé en ce que** les longueurs (L) des fentes débouchantes (2, 3) le long de la direction circonférentielle (C1) sont identiques.

6. Ensemble de tubes (20) selon la revendication 5, **caractérisé en ce que** les longueurs (L) des fentes débouchantes (2, 3) correspondent à un quart de la circonférence complète du tube connecteur (1, 23).

7. Ensemble de tubes (20) selon l'une quelconque des revendications 1 à 6, **caractérisé en ce que** les deux éléments de maintient (15, 16) sont agencés avant les éléments de verrou antagonistes (11, 12) dans une direction perpendiculaire à l'axe longitudinal (L1) du tube connecteur (1, 23).

8. Ensemble de tubes (20) selon l'une quelconque des revendications 1 à 7, **caractérisé en ce que** les deux éléments de verrou antagonistes (11, 12) sont agencés aux extrémités (13, 14) des fentes débouchantes (2, 3), les extrémités (13, 14) étant essentiellement orientées dans la même direction.

9. Ensemble de tubes (20) selon l'une quelconque des revendications 1 à 8, **caractérisé en ce que** le tube connecteur (1, 23) comprend une première extrémité (17) et une seconde extrémité (18), dans lequel l'au moins une fente débouchante (2, 3) est formée uniquement au niveau de la première extrémité (17).

10. Ensemble de tubes (20) selon l'une quelconque des revendications 1 à 8, **caractérisé en ce que** le tube connecteur (23) comprend une première extrémité (17) et une seconde extrémité (18), dans lequel l'au moins une fente débouchante (2, 3) est formée au niveau de la première extrémité (17), et dans lequel le diamètre interne d'une première section d'extrémité (30) qui comprend la première extrémité (17) et l'au moins une fente débouchante (2, 3) est supérieur au diamètre interne d'une section centrale (31) du tube connecteur (23) qui avoisine la première section d'extrémité (30).

11. Ensemble de tubes (20) selon la revendication 10, **caractérisé en ce que** le diamètre interne au niveau de la seconde extrémité (18) égale le diamètre interne de la section centrale (31).

12. Bloc-batterie (40) pour un véhicule, avec une pluralité de modules de batterie (41) et un système de distribution de fluide (42) comprenant un ensemble de tubes (20), dans lequel l'ensemble de tube (20) est l'ensemble de tube (20) selon l'une quelconque des revendications 1 à 11.

13. Bloc-batterie (40) selon la revendication 12, **caractérisé en ce que** le tube connecteur (1, 23) est agencé au moins par section entre les modules de batterie (41) adjacents.
